# EUROPEAN PATENT APPLICATION

(11) **EP 0 601 359 A2**
(43) Date of publication of application: **15.06.1994**
(21) Application number: 93118581.3
(22) Date of filing: 18.11.1993
(51) Int. Cl.: A23C 3/03, B01F 15/00

(54) **A rotating agitator for heat treatments**

(30) Priority: 11.12.1992 IT MI922833
(71) Applicant: GIANT S.r.l., I-41100 Modena (IT)
(72) Inventor: Cesari, Giuseppe, I-40100 Bologna (IT)
(74) Representative: Marietti, Giuseppe

(57) **Abstract**

An agitator for the heat treatment of foodstuff liquids, consisting of a container provided with heating and/or refrigeration means, a shaft and rotor which consist of a flat element provided with means of attachment to said shaft and defines with it one or more openings for the passage of the foodstuff liquid. A plurality of vanes substantially radial with respect to the shaft project perpendicularly from one or both sides of said flat element. The liquid is drawn through the openings and forced towards the outside by the vanes.

## Description

The present invention concerns a rotary agitator for the heat treatment of liquid and foodstuff mixtures, in particular for the pasteurization and/or refrigeration of milk or mixtures containing milk.

Many types of rotary agitators are known which consist essentially of a cylinder inside which there is a shaft to which is fixed a rotor which can be of a helical, turbine or rotating palette type.

The rotating palette type consists of a plurality of short vanes attached directly to the shaft or attached to a plate which is in turn attached directly to the shaft. Rapid rotation of the vanes drives the liquid to the container walls and forces it to rise along them.

In the turbine type, the rotor is an actual centrifugal pump rotor, which draws the liquid in correspondence of the shaft and throws it towards the walls of the container.

In the case of the heat treatment of foodstuff liquids, the above mentioned agitators present a series of problems related to the particular nature of the materials treated and the treatment carried out. In such treatments the liquid foodstuff, e.g. milk or milk-based mixtures, must be capable of heat exchange with the walls of the container, where there are suitable heating or refrigeration means of a type already known.

Correct treatment of the material, during pasteurization in particular, requires all the liquid to come into contact with the container walls several times until it reaches the desired temperature. This requirement necessitates controlled movement of the material from the shaft to the container walls and vice versa. To achieve this, the rotor is often fitted with a hollow cylinder coaxial with the shaft and distanced from the base of the container.

This solution is not at all satisfactory in as much as it does not completely solve the flow control problem and is also negative from the practical point of view since it hinders the cleaning of the rotor. Turbine rotors in particular cannot be used because of the said need for frequent and careful cleaning of the rotor.

An object of the present invention is to solve said difficulties by means of a rotor for foodstuff liquids which allows a controlled flow of the liquid inside the container by means of an extremely simple rotor structure which permits easy and effective cleaning of the device. This object is achieved by the present invention, which concerns a rotary agitator for the heat treatment of liquid and foodstuff mixtures, of a type consisting of a container provided with heating and/or refrigeration means, a shaft and a rotor, characterized in that said rotor consists of a flat element provided with means of attachment to said shaft and defining with the some one or more openings for the passage of said foodstuff liquid, as well as a plurality of vanes perpendicularly protruding from one or both sides of said flat element and disposed substantially radially with respect to said shaft.

According to a preferred embodiment of the invention, the rotor is mounted in a detachable way on the agitator shaft.

According to a further aspect of the invention, the agitator is provided with two or more rotors with differing numbers of vanes which can be mounted alternatingly on the shaft, depending on the physical characteristics, e.g. density, of the liquid to be treated.

A further object of the present invention is an agitator shaft fitted with means for a non-permanent attachment, preferably of the bayonet-type, of the rotor.

Another object of the present invention is a rotor for an agitator of the type as described above.

The presence of openings in correspondence of the agitator shaft permits optimum control of the movement of the liquid even in the absence of cylinders coaxial with the shaft, because the openings operate as suction openings for the liquid while the vanes operate as feeder elements for the same.

The invention will now be described in detail with reference to the attached drawings for an illustrative but not limiting purpose.
- Fig.1 is a schematic view of a section of an agitator according to the invention ;
- fig.2 is a schematic view in cross-section of an agitator provided with a detachable rotor; and
- Figs.3 and 4 are views from below and above respectively of two rotors according to the present invention.

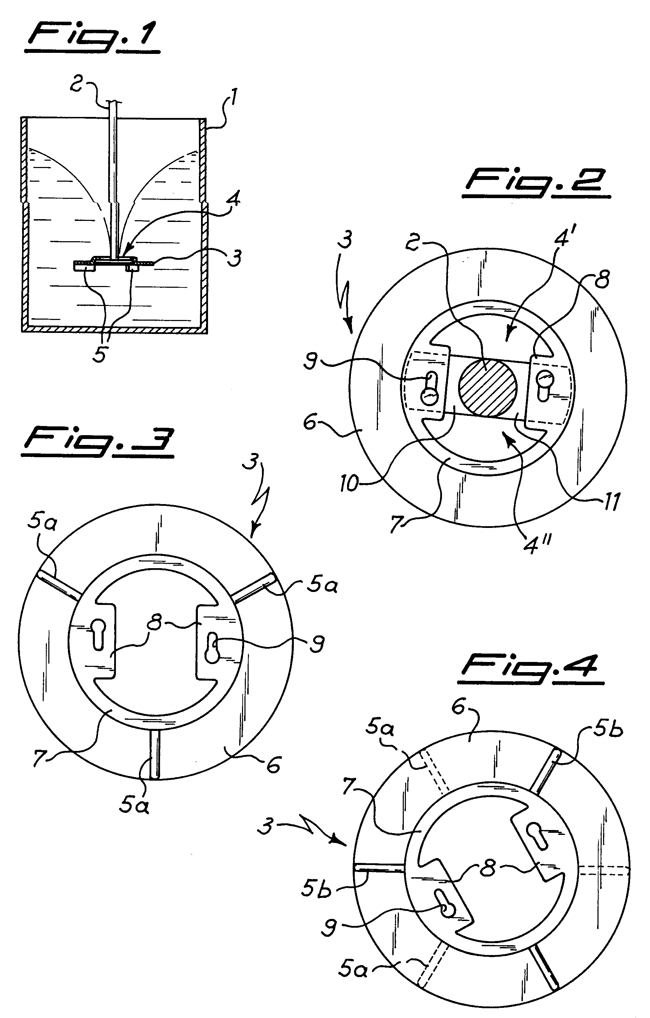

With reference first of all to Fig.1, the agitator according to the present invention consists of a container 1 equipped in a known way with means for heating or cooling the material contained within it. Such heating means are known and, not being objects of the present invention, are not shown in Fig.1.

Internal to the container 1 is a shaft 2 on which is fixed the rotor 3. According to the present invention, the rotor 3 is fitted with means of attachment to the shaft 2 and defines in correspondence with it one or more openings 4 for the passage of the liquid. The rotor 3 is further provided with a plurality of vanes 5 perpendicularly proiecting from one or both rotor sides and directed substantially radially with respect to the shaft.

The rotor is preferably mounted in a non-permanent way on the shaft 2, by means of a reversible attachment of a type already known, such as for instance the bayonet mounting shown in figs. 2 to 4. These figures show a preferred embodiment of the rotor, where the flat element consists of a semi-circular crown 6 whose internal edge presents a step 7 from which two sections 8 project in which the holes 9 for the bayonet engagement are cut.

Fig.2 shows a rotor of the type described above mounted on a shaft 2 by means of two arms of the latter, 10 and 11, which project radially from the shaft. As can be seen from the figure, the rotor 3 in this embodiment defines with the shaft 2 a pair of substantially semicircular openings 4' and 4'', within the circular crown.

The ratio between the area of the openings and the area of the circular crown, or of the corresponding flat element of different shape, is preferably within the range 0.2 to 1.0 and preferably equal to 0.5

The rotor, independent of the shape of the flat element which constitutes its base, is fitted with a plurality of vanes projecting from at least one side of the flat element and perpendicular to it. According to a characteristic of the present invention, the vanes are present on one or both sides of the flat element depending on the physical characteristics of the liquid to be treated.

In particular, the agitator according to the present invention consists preferably of two rotors, one with the vanes 5a projecting only from the lower side, and one with vanes 5a and 5b projecting from both sides of the flat element (or circular crown 6). In the cases of figures 3 and 4, the rotors are shown with vanes on only the lower side (Fig. 3) and on both sides (Fig.4).

In such embodiments there are three vanes and they are set at angles of 120 degrees, extending across the full radius of the circular crown 6, i.e. not extending into the openings 4.

The rotors are selected and mounted on the shaft according to the liquid to be treated, reducing work on the agitator to a minimum.

Once the heat treatment of the liquid, e.g. pasteurization, is finished, the rotor can be detached, thus permitting effective and rapid cleaning of the agitator.

The advantages of the present invention are therefore obvious : only a standard shaft need be produced, e.g. with just the arms 10 and 11, independent of the type of foodstuff liquid to be treated; differentiation in the planning phase is reduced to the production of the rotors-only, moreover of easy construction.

## Claims

1. An agitator for the heat treatment of foodstuff liquids, of the type consisting of a container provided with heating and/or refrigeration means, a shaft and a rotor, characterized in that said rotor consists of a flat element provided attachment means to said shaft and defining with the shaft one or more openings for the passage of said foodstuff liquid, as well as a plurality of vanes projecting perpendicularly from one or both sides said flat element and disposed substantially radially with respect to said shaft.

2. An agitator according to Claim 1, characterized in that said is being detachable from said shaft.

3. An agitator according to Claim 2, characterized in that it comprises a rotor provided with a plurality of vanes on the lower side and a rotor provided with a plurality of vanes on both sides of the circular crown, said rotors being mounted alternatingly on the shaft according to the characteristics of the liquid to be treated.

4. An agitator according to Claim 2 or 3, characterized in that the rotor is mounted on the shaft by bayonet engagement on a pair of arms extending radially from said shaft.

5. An agitator according to Claim 4, characterized in that said flat element of the rotor is in the form of a circular crown and defines with said shaft two substantially semicircular openings.

6. An agitator according to one of the previous Claims, characterized in that the ratio of the area of the openings to the area of the flat element is in the range of 0.2 to 1.0

7. An agitator according to one of the previous Claims, characterized in that the vanes on the same side of the rotor are three and are set at an angle of 120 degrees to each other.

8. An agitator according to Claim 7, characterized in that said vanes extend substantially for all of the with of said flat element.

9. A motor shaft for an agitator according to one of the Claims 2 to 8, characterized in that it has attachment means for a detachable rotor.

10. A rotor for an agitator according to one of the Claims 1 to 8.
